# EUROPÄISCHE PATENTSCHRIFT

(11) **EP 1 753 962 B1**
(45) Veröffentlichungstag und Bekanntmachung des Hinweises auf die Patenterteilung: **26.11.2008**
(21) Anmeldenummer: 05749151.6
(22) Anmeldetag: 14.05.2005
(51) Int. Cl.: F16B 11/00

(54) **KRAFTÜBERTRAGUNGSVORRICHTUNG MIT EINEM STAB AUS FASERVERBUNDWERKSTOFF**
POWER TRANSMITTING DEVICE COMPRISING A FIBER COMPOSITE ROD
DISPOSITIF DE TRANSMISSION DE FORCE POURVU D'UNE BARRE EN COMPOSITE À BASE DE FIBRES

(30) Priorität: 21.05.2004 DE 102004025002
(43) Veröffentlichungstag der Anmeldung: 21.02.2007
(73) Patentinhaber: AUDI AKTIENGESELLSCHAFT, 85045 Ingolstadt (DE)
(72) Erfinder: DICK, Wolfgang, 85055 Ingolstadt (DE); KÜHNERT, Reiner, 85080 Gaimersheim (DE)
(74) Vertreter: Asch, Konrad
(86) Internationale Anmeldenummer: PCT/EP2005/005305
(87) Internationale Veröffentlichungsnummer: WO 2005/113990

(56) Entgegenhaltungen:
- DE-A1- 4 312 045
- US-A- 3 672 712
- US-A- 4 041 599
- US-A- 4 740 101
- US-A- 4 787 771

## Beschreibung

Die Erfindung betrifft eine Kraftübertragungsvorrichtung mit einem Rohr aus Faserverbundwerkstoff gemäß der im Oberbegriff des Anspruches 1 angegebenen Art.

Eine derartige Kraftübertragungsvorrichtung ist beispielsweise aus der DE 102 47 003 A1 bekannt, die ein Rohr aus Faserverbundwerkstoff aufweist. In dieses Rohr aus Faserverbundwerkstoff greift an ihrem einen Ende ein Übertragungselement aus Metall ein und ist mit der Innenwandung des Rohres verklebt und über diese Klebeverbindung drehfest verbunden. Das Übertragungselement ist bereichsweise aufweitbar, so dass dieses zumindest bereichsweise gegen die Innenwandung des Stabes aus Faserverbundwerkstoff gedrückt wird.

Kritisch ist grundsätzlich bei Verbindungen zwischen einem Rohr aus Faserverbundwerkstoff und einem Übertragungselement aus Metall die Art der Verbindung. Nach der oben genannten Druckschrift ist es bekannt, eine Klebeverbindung herzustellen und das Übertragungselement so auszubilden, dass durch ein Aufweiten ein definierter Anpressdruck erzeugt wird. Hierdurch soll sich eine definierte Verklebung ergeben.

Diese bekannte technische Lösung mit einem Verkleben des Übertragungselements mit dem Rohr aus Faserverbundwerkstoff ist jedoch sehr schwer numerisch zu simulieren. Zeitraffende Versuche können das Risiko eines Ausfalls der Verbindung nicht absolut ausschließen. Es besteht daher weiterhin ein Restrisiko, dass nach bestimmter Einsatzzeit und/oder bestimmten Einsatzprofilen und/oder durch Missbrauch die Klebeverbindung versagt. Dies ist insbesondere im Kraftfahrzeugbau, bei kritischen Verbindungen, beispielsweise bei der Kraftübertragung von Lenkrad auf Lenkgestänge gefährlich, da bei einem Versagen der Klebeverbindung das Lenkrad nicht mehr mit dem Lenkgestänge verbunden ist.

Aus der DE 199 58 375 A1 ist ein Stab aus Faserverbundwerkstoff bekannt, der mit einem Übertragungselement aus Metall über ein Zwischenelement aus einem gleichen Werkstoff wie der Stab zur Übertragung von axialen Kräften formschlüssig mit dem Stab verbunden ist. Das Zwischenelement ist mit dem Stab verklebt. Das Zwischenelement und das Übertragungselement wirken als Anschlag und dienen zur axialen und somit formschlüssigen Fixierung.

Nachteilig bei dieser bekannten Ausführungsform ist, dass diese nicht für die Übertragung von Drehmomenten ausgelegt ist. Zudem muss das Zwischenelement zwingend aus dem Werkstoff des Stabes bestehen. Des Weiteren werden Kräfte sowohl über das Zwischenelement als auch direkt vom Übertragungselement auf den Stab übertragen.

In der US 4,041,599 ist ein Verfahren zum konzentrischen Befestigen einer Stange in einer rohrförmigen Welle offenbart. Das Verfahren zeichnet sich dadurch aus, dass ein Abschnitt der zu befestigenden Stange in das Rohr eingeführt und mit diesem verklebt wird, wobei der zu verklebenden Abschnitt der Stange zwei voneinander benachbart angeordnete Dichtungsringe aufweist und der zwischen den Dichtungsringen ausgebildete Ringraum beim Einführvorgang der Stange in das Rohr über einen am Rohr angebrachten Trichter kontinuierlich mit Klebstoff aufgefüllt wird.

Aus der US 4,740,101 ist ein Kupplungssystem für ein Ölpumpengestänge bekannt. Für die Verbindung zweier Stangen des Ölpumpgestänges ist ein Verbindungselement vorgesehen, das zwischen den zu verbindenden Stangen angeordnet ist und dessen jeweiliges Ende in ein zugeordnetes, die jeweilige Stange umfassendes, hülsenförmiges Element eingreift, wobei zwischen Stange und hülsenförmigem Element jeweils ein Zwischenelement angeordnet ist und das Zwischenelement mit der Stange über Verkleben und mit den hülsenförmigen Element mittels Formschluss verbunden ist.

Der Erfindung liegt die Aufgabe zugrunde, eine Kraftübertragungsvorrichtung anzugeben, die den technischen mechanischen Forderungen über die gesamte Fahrzeuglebensdauer unter allen bekannten Einsatzbedingungen erfüllt.

Diese Aufgabe wird durch die kennzeichnende Merkmale des Anspruches 1 in Verbindung mit seinen Oberbegriffsmerkmalen gelöst.

Die Unteransprüche bilden vorteilhafte Weiterbildungen der Erfindung.

Der Erfindung liegt die Erkenntnis zugrunde, dass sich durch das Zwischenschalten eines Adapters zwischen dem Rohr aus Faserverbundwerkstoff und dem Übertragungselement durch die Ausbildung und die Dimensionierung des Formschlusses die Eigenschaft der Verbindung genau berechnen und bestimmen lässt. Die Verbindung kann dabei so ausgelegt werden, dass im normalen Betrieb keine Schädigung der Formschlussverbindung erfolgt. Die Klebeverbindung lässt sich über die Größe der Klebeflächen so definieren, dass diese auf alle Fälle hält und die Verbindungseigenschaften nur von dem Formschluss gewährleistet werden.

Weiterhin kann durch die Wahl der Art der Profilierung in Umfangsrichtung des Adapters und des zugeordneten Bereiches des Übertragungselements die Belastung der Klebeverbindung und der Matrix des Faserverbundwerkstoffes des Rohrs in weiten Bereichen den Anforderungen entsprechend angepasst werden. Die aufgrund der geometrischen Ausformungen entstehenden Belastungen lassen sich durch rechnerische Simulation sehr gut bestimmen.

Nach der Erfindung ist daher zwischen dem Rohr und dem Übertragungselement ein Adapter zwischengeschaltet, der mit dem Rohr, stoffschlüssig und mit dem Übertragungselement formschlüssig drehfest verbunden ist. Der Adapter ist dabei als ein eine Innen- und Außenfläche aufweisendes Ringelement ausgebildet und vollständig innerhalb des Rohrs angeordnet. Die stoffschlüssige Verbindung zwischen Adapter und Rohr ist über die Außenfläche des Adapters hergestellt, während die formschlüssige Verbindung zwischen Adapter und Übertragungselement über die Innenfläche des Adapters erfolgt.

Die stoffschlüssige Verbindung zwischen Adapter und Rohr ist beispielsweise durch Kleben oder Schweißen herstellbar.

Vorzugsweise erfolgt dabei der Formschluss durch die Art der Profilierung in Umfangsrichtung des Adapters und des zugeordneten Bereichs des Übertragungselements.

Gemäß einer Ausführungsform der Erfindung wird der Formschluss durch ein Keilwellenprofil, ein Kerbzahnprofil, ein Zahnnaben-/Zahnwellenprofil im Adapter und Übertragungselement hergestellt.

Ein derartiger Formschluss zwischen Adapter und Übertragungselement ist dabei so ausgelegt, dass auch bei auftretenden Spannungsspitzen die Zähne bzw. Keile im unterkritischen Bereich im Normalbetrieb belastet werden. Da Formschlussprofile numerisch erfasst werden können, ist dies eine einfache Möglichkeit, den Normalbetrieb zu gewährleisten.

Insbesondere ist dabei der Adapter, nämlich die zur Verfügung stehende Fläche der Klebeverbindung, so dimensioniert, dass die auftretende Spannung die zulässige Scherspannung der Klebe- bzw. Schweißverbindung nicht überschreitet.

Eine bevorzugte Anwendung der Erfindung ist in Kraftfahrzeugen zu sehen, vorzugsweise wenn die Kraftübertragungsvorrichtung Teil einer Lenksäule eines Kraftfahrzeugs zum Übertragen von Lenkkräften zwischen einem Lenkrad und einem Lenkgestänge ist. Dabei ist vorzugsweise der aus dem Rohr herausstehende Teil des Übertragungselements in Richtung auf das Rohr konisch ausgebildet, also mit einem konischen Ansatz versehen. Die Normal-Belastung für die Kraftübertragungsvorrichtung im Fahrbetrieb besteht aus Torsionsmomenten mit geringen, durch mögliche Kreuzgelenke in den Anbindungspunkten induzierten Biegespannungen. Die "Versagens-Belastung" besteht aus einer axialen Kraft. Durch den konischen Ansatz des Übertragungselements wird das Rohr durch Eindringen des Übertragungselements definiert aufgeweitet/zerstört.

Das Übertragungselement besteht insbesondere aus Metall und der Adapter aus Kunststoff oder Metall. Der Adapter aus Kunststoff kann dabei in einem Spritzguss- oder Extrusionsverfahren hergestellt sein. Der Adapter aus Metall kann durch Kaltumformung hergestellt sein.

Von Vorteil bei dieser Ausbildung ist, dass das Wellenprofil (Keil, Kerb, Zahn,....) in einem Stück aus Faserverbundwerkstoff schwer herstellbar, im Adapter in Form eines Kunststoff- oder Metallzwischenstück einfach hergestellt werden kann.

Um den Gasaustausch beim Aushärten der Klebeverbindung zwischen Adapter und Stab zu gewährleisten, ist der Adapter bereichsweise gelocht. Hierdurch können die Gase austreten und es kommt zu einem schnellen Aushärten der Klebeverbindung. Zudem entsteht durch austretenden Klebstoff in der Bohrung nach dem Aushärtung ein gewisser Formschluss, welcher die Sicherheit der Klebeverbindung bei Torsionsbelastung erhöht.

Die Kraftübertragungsvorrichtung weist vorzugsweise eine zur Quermittelebene symmetrische Ausbildung auf. Um die Eigenschaften der Verbindung einfach und vollständig festlegen zu können, ist der Adapter im Hinblick auf die zu übertragenen Kräften zwischen Übertragungselement und Stab in Reihe geschaltet.

Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen, in der Zusammenfassung und den Zeichnungen werden die in der hinten angeführten Liste der Bezugszeichen verwendeten Begriffe und zugeordneten Bezugszeichen verwendet. Die Zeichnungen zeigen in
- Figur 1: einen Längsschnitt durch die Kraftübertragungsvorrichtung nach einer Ausführungsform der Erfindung, und

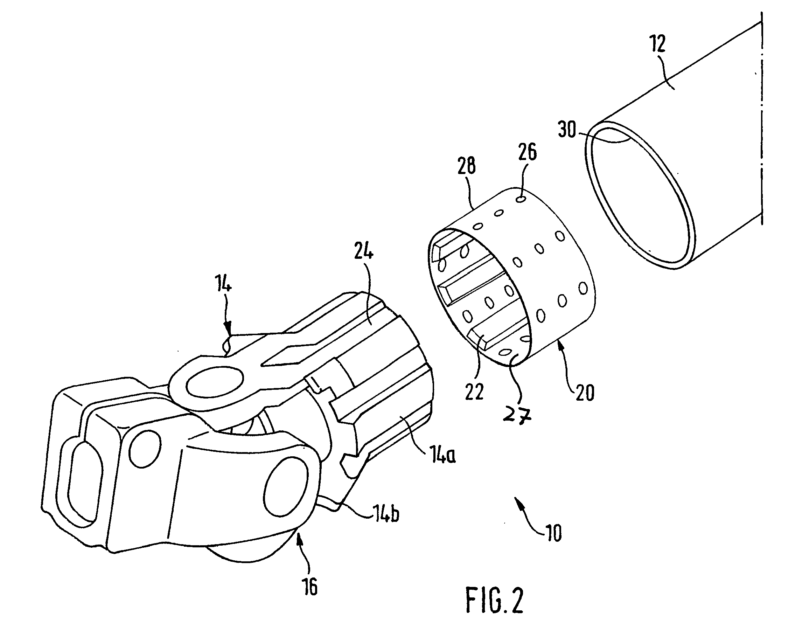

- Figur 2: eine perspektivische Explosionsdarstellung eines Endes der Kraftübertragungsvorrichtung.

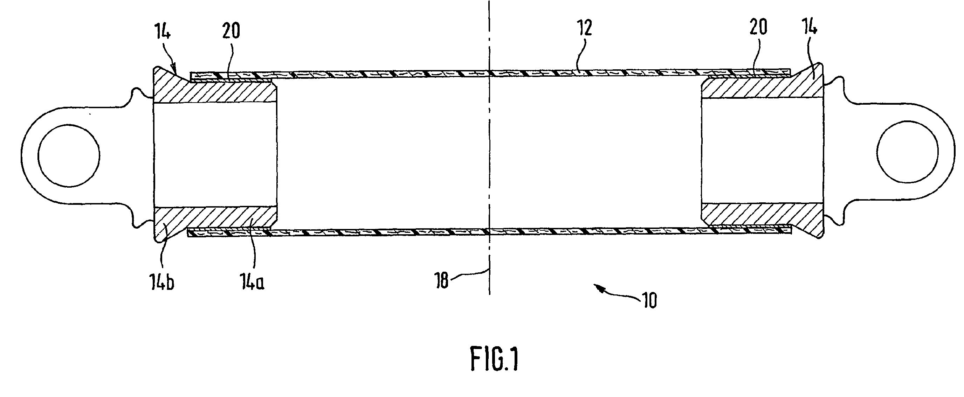

In Figur 1 ist in einer Längsschnittdarstellung eine Kraftübertragungsvorrichtung als Teil einer Lenksäule eines Kraftfahrzeugs dargestellt. Die Kraftübertragungsvorrichtung 10 besteht aus einem Rohr 12 aus Faserverbundwerkstoff. In die Enden des Rohres 12 sind Übertragungselemente 14 als Teil eines Kreuzgelenks 16 eingebracht.

Die Kraftübertragungsvorrichtung 10 kann bezüglich ihrer Quermittelebene 18 kann symmetrisch ausgebildet sein. Zwischen Rohr 12 und Übertragungselement 14 ist ein Adapterring 20 zwischengeschaltet. Das Übertragungselement 14 weist einen der Innenseite des Adapterrings 20 zugeordneten Bereich 14 und einen sich daran anschließenden konischen Ansatz 14b auf.

Der Adapterring 20 weist an seiner Innenseite mehrere Keilprofile 22 auf, die Keilnuten 24 des Übertragungselements 14 zugeordnet sind.

Zwischen den Keilprofilen 22 sind nebeneinander jeweils mehrere Bohrungen 26 in den Adapterring 20 eingebracht. Der Adapterring 20 ist an einem Ende des Rohres 12 mit seiner Außenseite 28 fest mit der Innenseite 30 des Rohres 12 verklebt oder verschweißt. Über die Bohrungen 26 kann der Klebstoff einfach aushärten, da die beim Aushärtungsprozess entstehenden Gase über die Bohrungen 26 entweichen können. Zudem dringt Klebstoff in die Bohrungen 26. Nach dem Aushärten entsteht durch den ausgetretenen Klebstoff, der nun kleine Stoffe bildet, ein gewisser Formschluss, welcher die Sicherheit der Klebeverbindung erhöht. Nach dem Verkleben des Adapterringes 20 mit dem Rohr 12 wird das Übertragungselement 14 in den mit dem Rohr 12 verbundenen Adapterring 21 eingesteckt. Über das durch die Keilprofile 22 und Keilnuten 24 gebildete Keilwellenprofil erfolgt eine drehfeste Verbindung zwischen dem Übertragungselement 14 und dem Adapterring 20 sowie dem Rohr 12.

Die Dimensionierung der Länge des Adapterringes 20 und somit der Klebefläche zwischen Adapterring 20 und Rohr 12 wird dadurch bestimmt, dass ein Lösen der Klebeverbindung auf alle Fälle unter den zu erwartenden Belastungen verhindert werden soll. Das Keilprofil 22 sowie die Keilnuten 24 sind so dimensioniert, dass ein Ausfall der Verbindung ebenfalls verhindert wird. Sollte es jedoch in Folge eines Autocrashs zu axialen Belastungen kommen, dringt das Übertragungselement 14 in das Rohr 12 ein, über den konischen Ansatz 14b wird das Rohr 12 definiert aufgeweitet und zerstört. Das für den Crash notwendige Lösen der Verbindung zwischen Übertragungselement 14 und Rohr 12 wird dadurch auf einfache Weise gewährleistet. Die Auslegung ist ohne weiteres über Rechenverfahren möglich. Hierdurch wird das Risiko des Versagens im Normalbetrieb ausgeschlossen.

Die Verklebung ist so vorzugsweise gestaltet, dass ein bei ca. 180° Celsius warm aushärtender Klebestoff dünn auf die vorbereiteten Klebeflächen der Innenseite 30 des Rohres 12 und die Außenseite 28 des Adapterringes 20 aufgebracht wird. Um den Gasaustausch im chemischen Aushärteprozess zu unterstützen, sind die Adapterringe 20 partiell mit den Bohrungen 26 versehen.

Während des Herstellungsprozessen können Dorne für die Dauer des Fügevorganges die noch nicht montierten Übertragungselemente 14 ersetzen. Hierdurch wird erreicht, dass während des Herstellungsprozesses in allen Temperaturbereichen gleiche Geometrie - Umfang und Radius -, also die Maßhaltigkeit Formschlussprofile, gewährleistet wird.

Die Erfindung zeichnet sich dadurch aus, dass durch das Formschlussprofil zwischen Adapterring 20 und Übertragungselement 14 die Spannungsspitzen im Normalbetrieb an den Keilprofilen 22 und Keilnuten 24 auf einfache weise unterkritisch bleiben.

### BEZUGSZEICHENLISTE

- 10: Kraftübertragungsvorrichtung
- 12: Rohr
- 14: Übertragungselement
- 14a: dem Adapterring zugeordneten Bereich
- 14b: konischer Ansatz
- 16: Kreuzgelenk
- 18: Quermittelebene
- 20: Adapterring
- 22: Keilprofil
- 24: Keilnute
- 26: Bohrungen
- 27: Innenseite des Adapterringes
- 28: Außenseite des Adapterringes
- 30: Innenseite des Rohres

## Patentansprüche

1. Kraftübertragungsvorrichtung (10) mit einem Rohr (12) aus Faserverbundwerkstoff und zumindest einem Übertragungselement (14) an einem Ende des Rohrs (12), das mit dem Rohr (12) drehfest verbunden ist, wobei zwischen dem Rohr (12) und dem Übertragungselement (14) ein Adapter (20) zwischengeschaltet ist, der mit dem Rohr (12) stoffschlüssig und mit dem Übertragungselement (14) formschlüssig drehfest verbunden ist, **dadurch gekennzeichnet, dass** der Adapter (20) als ein eine Innen- und Außenfläche (27, 28) aufweisendes Ringelement ausgebildet ist und vollständig innerhalb des Rohrs (12) angeordnet ist und die stoffschlüssige Verbindung zwischen Adapter (20) und Rohr (12) über die Außenfläche (28) des Adapters (20) und die formschlüssige Verbindung zwischen Adapter (20) und Übertragungselement (14) über die Innenfläche (27) des Adapters (20) hergestellt ist.

2. Kraftübertragungsvorrichtung nach Anspruch 1, **dadurch gekennzeichnet, dass** der Stoffschluss zwischen Rohr (12) und Adapter (14) durch Kleben oder Schweißen hergestellt ist.

3. Kraftübertragungsvorrichtung nach Anspruch 1 und 2, **dadurch gekennzeichnet, dass** der Formschluss durch die Art der Profilierung in Umfangsrichtung des Adapters (20) und des zugeordneten Bereiches (14a) des Übertragungselements (14) erfolgt.

4. Kraftübertragungsvorrichtung nach Anspruch 3, **dadurch gekennzeichnet, dass** der Formschluss durch ein Keilwellenprofil zwischen Adapter (20) und Übertragungselement (14) hergestellt ist.

5. Kraftübertragungsvorrichtung nach Anspruch 3, **dadurch gekennzeichnet, dass** der Formschluss durch ein Kerbzahnprofil zwischen Adapter (20) und Übertragungselement (14) hergestellt ist.

6. Kraftübertragungsvorrichtung nach Anspruch 3, **dadurch gekennzeichnet, dass** der Formschluss durch ein Zahnnaben/Zahnwellenprofil oder Polygon-Profil zwischen Adapter (20) und Übertragungselement (14) hergestellt ist.

7. Kraftübertragungsvorrichtung nach einem der vorangegangenen Ansprüche, **dadurch gekennzeichnet, dass** das durch das Keilwellenprofil, das Kerbzahnprofil oder das Zahnnaben/Zahnwellenprofil hergestellte Formschlussprofil zwischen Adapter (20) und Übertragungselement (14) so ausgelegt ist, dass auch bei auftretenden Spannungsspitzen im Normalbetrieb die Zähne bzw. Keilprofile (22) im unterkritischen Bereich belastet werden.

8. Kraftübertragungsvorrichtung nach einem der vorangegangenen Ansprüche, **dadurch gekennzeichnet, dass** der Adapter (20) so dimensioniert ist, dass die auftretende Scherspannung die zulässige Scherspannung der Klebe- oder Schweißverbindung nicht überschreitet.

9. Kraftübertragungsvorrichtung nach einem der vorangegangenen Ansprüche, **gekennzeichnet durch** eine Ausbildung als Teil einer Lenksäule eines Kraftfahrzeugs zum Übertragen von Lenkkräften zwischen einem Lenkrad und einem Lenkgestänge.

10. Kraftübertragungsvorrichtung nach einem der vorangegangenen Ansprüche, **dadurch gekennzeichnet, dass** das Übertragungselement (14) aus Metall besteht.

11. Kraftübertragungsvorrichtung nach einem der vorangegangenen Ansprüche, **dadurch gekennzeichnet, dass** der Adapter (20) bereichsweise gelocht ist.

12. Kraftübertragungsvorrichtung nach einem der vorangegangenen Ansprüche, **gekennzeichnet durch** eine zur Quermittelebene (18) symmetrische Ausbildung.

13. Kraftübertragungsvorrichtung nach einem der vorangegangenen Ansprüche, **dadurch gekennzeichnet, dass** der Adapter (20) im Hinblick auf die zu übertragenden Kräfte zwischen Übertragungselement (14) und Rohr (12) in Reihe geschaltet ist, so dass alle Kräfte zwischen Übertragungselement (14) und Rohr (12) über den Adapter (20) übertragen werden.

14. Kraftübertragungsvorrichtung nach einem der vorangegangenen Ansprüche **dadurch gekennzeichnet, dass** der Adapter (20) aus Kunststoff besteht, der durch Spritzguss oder Extrusionsverfahren hergestellt wurde oder dass der Adapter (20) aus Metall besteht, der durch Kaltumformung hergestellt wurde.

15. Kraftübertragungsvorrichtung nach einem der vorangegangenen Ansprüche, **dadurch gekennzeichnet, dass** das Übertragungselement (14) einen konischen Ansatz (14b) aufweist, der bei vorbestimmten axialen Kräften und einem **dadurch** hervorgerufene Eindringen des Übertragungselements (14) in das Rohr (12) ein Aufweiten des Rohres (12) und somit ein Lösen der Verbindung zwischen Übertragungselement (14) und Rohr (12) gewährleistet.

## Claims

1. Power transmitting device (10) with a tube (12) made of a fibre composite and at least one transmitting element (14) at one end of the tube (12), which is connected to the tube (12) so that it is rotationally fixed, in which an adaptor (20) is connected in series between the tube (12) and the transmitting element (14), which is firmly bonded to the tube (12) and connected positively to the transmitting element (14) so that it is locked, **characterised in that** the adaptor (20) is made as a ring element with an internal and external surface (27, 28) and is arranged completely inside the tube (12) and the firmly bonded connection between the adaptor (20) and tube (12) is produced through the external surface (28) of the adaptor (20) and the positive connection between the adaptor (20) and the transmitting element (14) is produced through the internal surface (27) of the adaptor.

2. Power transmitting device according to claim 1, **characterised in that** the firm bond between the tube (12) and the adaptor (14) is produced by gluing or welding.

3. Power transmitting device according to claim 1 and 2, **characterised in that** the positive connection is made through the type of profiling in the circumferential direction of the adaptor (20) and the allocated area (14a) of the transmitting element (14).

4. Power transmitting device according to claim 3, **characterised in that** the positive connection is produced through a splined profile between the adaptor (20) and the transmitting element (14).

5. Power transmitting device according to claim 3, **characterised in that** the positive connection is produced through a serrated profile between the adaptor (20) and the transmitting element (14).

6. Power transmitting device according to claim 3, **characterised in that** the positive connection is produced through an internal/external spline or spline profile between the adaptor (20) and the transmitting element (14).

7. Power transmitting device according to one of the previous claims, **characterised in that** the positive connection profile between the adaptor (20) and the transmitting element (14) produced through the spline profile, the serrated profile or the internal/external spline profile is designed so that the teeth or splines (22) are loaded in the subcritical area in normal operation, even when power surges occur.

8. Power transmitting device according to one of the previous claims, **characterised in that** the adaptor (20) is dimensioned so that the shearing stress occurring does not exceed the permissible shearing stress of the glued or welded connection.

9. Power transmitting device according to one of the previous claims, **characterised by** a formation as part of a steering column of a motor vehicle for transmitting steering forces between a steering wheel and a steering linkage.

10. Power transmitting device according to one of the previous claims, **characterised in that** the transmitting element (14) is made of metal.

11. Power transmitting device according to one of the previous claims, **characterised in that** the adaptor (20) is punched in some areas.

12. Power transmitting device according to one of the previous claims, **characterised by** a formation, which is symmetrical to the transverse median plane (18).

13. Power transmitting device according to one of the previous claims, **characterised in that** the adaptor (20) is connected in series between the transmitting element (14) and the tube (12) with reference to the forces to be transmitted so that all forces are transmitted between the transmitting element (14) and the tube (12) through the adaptor (20).

14. Power transmitting device according to one of the previous claims, **characterised in that** the adaptor (20) is made of plastic, which was produced by the die-cast or extrusion process, or that the adaptor (20) is made of metal, which was produced by cold forming.

15. Power transmitting device according to one of the previous claims, **characterised in that** the transmitting element (14) has a conical lug, which ensures widening of the tube (12) and therefore loosening of the connection between the transmitting element (14) and the tube (12), when there are predetermined axial forces and the transmitting element (14) penetrates the tube (12) as a result of this.

## Revendications

1. Dispositif de transmission de force (10) avec un tube (12) en matériau composite renforcé par fibres et au moins un élément de transmission (14) sur une extrémité du tube (12), qui est relié fixe en rotation au tube (12), entre le tube (12) et l'élément de transmission (14) étant intercalé un adaptateur (20) qui est relié fixe en rotation par liaison de matière au tube (12) et par complémentarité de forme à l'élément de transmission (14), **caractérisé en ce que** l'adaptateur (20) est réalisé sous forme d'un élément annulaire présentant une surface intérieure et extérieure (27, 28) et est complètement disposé à l'intérieur du tube (12) et l'assemblage par liaison de matière entre l'adaptateur (20) et le tube (12) est établi sur la surface extérieure (28) de l'adaptateur (20) et l'assemblage par complémentarité de forme entre l'adaptateur (20) et l'élément de transmission (14) est établi sur la surface intérieure (27) de l'adaptateur (20).

2. Dispositif de transmission de force selon la revendication 1, **caractérisé en ce que** la liaison de matière entre le tube (12) et l'adaptateur (14) est établie par collage ou soudage.

3. Dispositif de transmission de force selon la revendication 1 et 2, **caractérisé en ce que** la liaison par complémentarité de forme est effectuée par le type de profilage dans la direction périphérique de l'adaptateur (20) et de la zone (14a) associée de l'élément de transmission (14).

4. Dispositif de transmission de force selon la revendication 3, **caractérisé en ce que** la liaison par complémentarité de forme est établie par un profil cannelé entre l'adaptateur (20) et l'élément de transmission (14).

5. Dispositif de transmission de force selon la revendication 3, **caractérisé en ce que** la liaison par complémentarité de forme est établie par un profil dentelé entre l'adaptateur (20) et l'élément de transmission (14).

6. Dispositif de transmission de force selon la revendication 3, **caractérisé en ce que** la liaison par complémentarité de forme est établie par un profil pour moyeu cannelé/arbre cannelé ou un profil pour arbre cannelé entre l'adaptateur (20) et l'élément de transmission (14).

7. Dispositif de transmission de force selon l'une quelconque des revendications précédentes, **caractérisé en ce que** le profil par complémentarité de forme établi par le profil cannelé, le profil dentelé ou le profil à moyeu cannelé/arbre cannelé entre l'adaptateur (20) et l'élément de transmission (14) est conçu de telle sorte que les dents ou les profils cannelés (22) soient chargés dans la plage sous-critique également en cas de tension de pointe survenant en fonctionnement normal.

8. Dispositif de transmission de force selon l'une quelconque des revendications précédentes, **caractérisé en ce que** l'adaptateur (20) est dimensionné de telle sorte que la tension de cisaillement survenant ne dépasse pas la tension de cisaillement autorisée de la liaison par collage ou soudage.

9. Dispositif de transmission de force selon l'une quelconque des revendications précédentes, **caractérisé par** une réalisation comme partie d'une colonne de direction d'un véhicule automobile pour la transmission de forces de direction entre un volant de direction et une timonerie de direction.

10. Dispositif de transmission de force selon l'une quelconque des revendications précédentes, **caractérisé en ce que** l'élément de transmission (14) est constitué en métal.

11. Dispositif de transmission de force selon l'une quelconque des revendications précédentes, **caractérisé en ce que** l'adaptateur (20) est perforé par endroits.

12. Dispositif de transmission de force selon l'une quelconque des revendications précédentes, **caractérisé par** une réalisation symétrique par rapport au plan médian transversal (18).

13. Dispositif de transmission de force selon l'une quelconque des revendications précédentes, **caractérisé en ce que** l'adaptateur (20) est monté en série en ce qui concerne les forces à transmettre entre l'élément de transmission (14) et le tube (12) de sorte que toutes les forces entre l'élément de transmission (14) et le tube (12) soient transmises par le biais de l'adaptateur (20).

14. Dispositif de transmission de force selon l'une quelconque des revendications précédentes, **caractérisé en ce que** l'adaptateur (20) se compose de matière plastique, lequel a été fabriqué par moulage par injection ou dans un procédé d'extrusion ou **en ce que** l'adaptateur (20) se compose de métal, lequel a été fabriqué par formage à froid.

15. Dispositif de transmission de force selon l'une quelconque des revendications précédentes, **caractérisé en ce que** l'élément de transmission (14) présente un épaulement (14b) conique qui garantit en cas de forces axiales prédéterminées et d'une pénétration suscitée par là-même de l'élément de transmission (14) dans le tube (12) un élargissement du tube (12) et ainsi un desserrement de la liaison entre l'élément de transmission (14) et le tube (12).
